# FASCICULE DE BREVET EUROPEEN

(11) **EP 3 024 066 B1**
(45) Date de publication et mention de la délivrance du brevet: **22.11.2017**
(21) Numéro de dépôt: 15196056.4
(22) Date de dépôt: 24.11.2015
(51) Int. Cl.: H01M 4/04, H01M 4/13, H01M 4/139, H01M 4/38, H01M 10/052

(54) **PROCÉDÉ D'ENRICHISSEMENT EN ESPÈCE IONIQUE D'UNE ÉLECTRODE D'UNE MICROBATTERIE**
VERFAHREN ZUR ANREICHERUNG MIT IONISCHER SPEZIES VON EINER ELEKTRODE EINER MIKROBATTERIE
METHOD OF ENRICHMENT WITH IONIC SPECIES OF AN ELECTRODE OF A MICROBATTERY

(30) Priorité: 24.11.2014 FR 1461380
(43) Date de publication de la demande: 25.05.2016
(73) Titulaire: Commissariat à l'Energie Atomique et aux Energies Alternatives, 75015 Paris (FR)
(72) Inventeur: MARTIN, Steve, 38160 Saint-Sauveur (FR); PORTHAULT, Hélène, 38130 Echirolles (FR); POULET, Sylvain, 38600 Fontaine (FR)
(74) Mandataire: Talbot, Alexandre

(56) Documents cités:
- EP-A1- 2 192 638
- WO-A1-99/43034
- FR-A1- 2 943 181
- US-A- 5 558 953
- US-A1- 2010 330 411
- US-A1- 2011 045 351

## Description

### Domaine technique de l'invention

L'invention est relative à un procédé d'enrichissement d'une électrode d'un dispositif électrochimique en espèce ionique et est également relative à une électrode ainsi obtenue.

### État de la technique

Les microbatteries « tout solide » sont des batteries dont tous les composants (collecteurs de courant, électrode positive et électrode négative, électrolyte) se présentent sous la forme d'un empilement de couches minces. L'empilement actif présente une épaisseur de l'ordre de 10 à 15*µ*m.

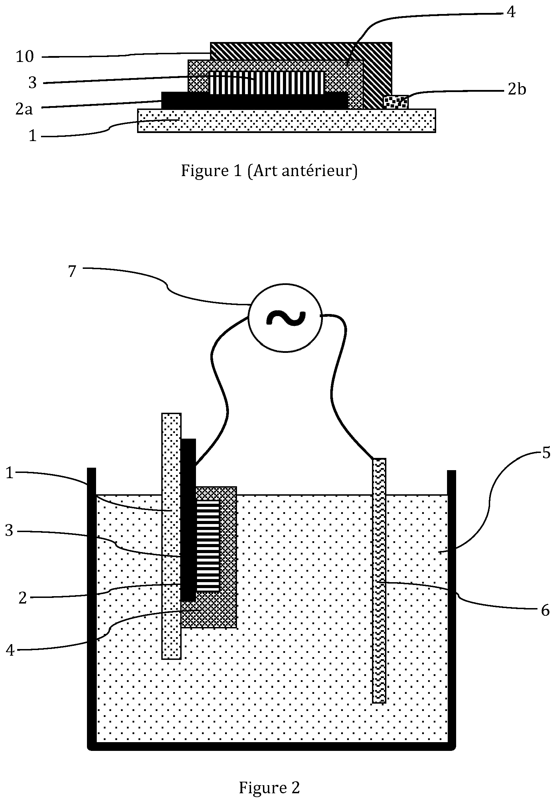

Classiquement, ces microbatteries sont réalisées en déposant successivement sur un substrat 1 au moins (figure 1) :
- un collecteur de courant cathodique 2a et un collecteur de courant anodique 2b,
- une électrode positive ou cathode 3, l'électrode positive étant déposée sur le collecteur de courant cathodique 2a,
- un électrolyte solide 4, l'électrolyte solide 4 recouvrant entièrement la cathode 3, mais pas totalement le collecteur cathodique 2a,
- une électrode négative ou anode 10, l'électrode négative étant en contact le collecteur anodique 2b.

Les couches minces sont généralement réalisées par des techniques de dépôts sous vide type dépôt physique en phase vapeur (PVD pour « Physical Vapor Deposition ») ou dépôt chimique en phase vapeur (CVD pour « Chemical Vapor Depostion ») ou par évaporation thermique selon la nature des matériaux qui les constituent.

Le principe de fonctionnement de ces microbatteries repose sur l'insertion et la désinsertion d'ions d'un métal alcalin ou de protons dans l'électrode positive. Actuellement, la plupart des microbatteries utilisent comme espèce ionique, des ions lithium, issus de l'un des matériaux formant les électrodes.

Généralement, les ions lithium sont issus soit d'une électrode en lithium métallique (cas des microbatteries dites « lithium-métal »), soit d'une électrode formée d'un matériau d'insertion lithié comme, par exemple, un oxyde mixte cobalt/lithium, nickel/lithium ou manganèse/lithium (cas des microbatteries dites « lithium-ion »).

Le point de fusion du lithium étant de 181°C, les électrodes en lithium métallique ne peuvent pas être utiliser dans des microbatteries à des températures élevées.

Les matériaux d'insertion lithiés du type oxyde mixte, quant à eux, nécessitent un recuit thermique à une température d'au moins 600°C, pour favoriser la cristallisation et améliorer la réversibilité du cyclage des ions lithium dans le matériau. Or, un tel recuit est incompatible avec certaines technologies comme la technologie dite "Above-IC", qui vise à placer les microbatteries en partie supérieure des circuits intégrés, qui ne supportent pas de telles températures.

Afin de pallier ces inconvénients, le document FR 2 873 854 propose de fabriquer une électrode en matériau lithié, dont la mise en oeuvre ne nécessite pas de recuit à des températures dépassant 300°C.
Un matériau d'électrode non lithié, par exemple le TiS₂, est soumis à une étape de lithiation in situ. Pour cela, une ou plusieurs couches de matériau non lithié sont associées à une ou plusieurs couches de lithium. Le lithium ayant tendance à diffuser dans le matériau d'électrode non lithié, des électrodes en matériau lithié sont obtenues.
Cependant, pour obtenir une composition homogène, il est nécessaire de favoriser la diffusion du lithium par un recuit thermique sous atmosphère inerte à des températures de l'ordre de 100°C-300°C et/ou de multiplier le nombre de couches matériau/lithium.
De plus comme le lithium métallique est très réactif vis-à-vis de l'environnement, l'électrode doit être encapsulée dans un matériau propre à la protéger du milieu environnant, notamment de l'humidité. La dernière couche doit être une couche de matériau non lithié, pour empêcher le lithium de réagir avec l'environnement extérieur.

Le document EP 2 320 502 propose de réaliser la lithiation du matériau d'électrode non lithié en court-circuitant les électrodes de la batterie.
Pour réaliser la lithiation, les couches suivantes sont déposées sur un substrat :
- une première électrode (cathode) en oxysulfure de titane TiOS,
- un électrolyte solide en LIPON,
- une seconde électrode (anode) en germanium ou silicium.
Les deux électrodes ainsi formées sont mises en court-circuit.
Du lithium est ensuite déposé sur l'anode. Le matériau d'anode devient alors conducteur sous l'influence du lithium et la batterie se met à fonctionner en court-circuit. Le lithium présent dans l'anode, diffuse à travers l'électrolyte, jusqu'à la cathode où il s'insère dans le matériau de cathode. Le court-circuit est maintenu jusqu'à l'évaporation complète du lithium. Les ions lithium sont disposés majoritairement dans la couche de cathode.
Cependant, la mise en court-circuit de la batterie peut provoquer une diffusion rapide et non contrôlable des ions lithium, ce qui est susceptible de provoquer des phénomènes de surlithiation localisée et/ou une dégradation des interfaces électrodes/électrolyte.

### Objet de l'invention

L'invention a pour but de remédier aux inconvénients de l'art antérieur et, en particulier, de proposer un procédé d'enrichissement d'une électrode d'un dispositif électrochimique, simple et facile à mettre en oeuvre, et permettant d'obtenir des électrodes homogènes et de bonne qualité.

On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, en coupe, un dispositif électrochimique, selon l'art antérieur,
- la figure 2 représente, de manière schématique, en coupe, une étape du procédé d'enrichissement d'une électrode d'un dispositif électrochimique, selon l'invention,
- les figures 3 à 7 représentent, de manière schématique, en vue de dessus, un dispositif électrochimique à différents stades du procédé de réalisation selon l'invention,
- la figure 8 représente, de manière schématique et en coupe, un dispositif électrochimique contenant une électrode enrichie selon le procédé de l'invention,
- la figure 9 représente des courbes de cyclage pour différents courants d'une microbatterie obtenue selon le procédé de l'invention.

### Description d'un mode de réalisation préférentiel de l'invention

Le procédé d'enrichissement d'une électrode en espèce ionique peut être utilisé pour différents types de dispositif électrochimique. Il est utilisé pour enrichir une électrode d'une batterie, d'une microbatterie ou d'un système électrochrome ou d'une supercapacité en couches minces. Comme représenté à la figure 2, le substrat 1 utilisé pour le procédé d'enrichissement est muni au moins d'un empilement comprenant :
∘ un premier collecteur de courant 2 recouvrant au moins une partie du substrat 1,
∘ une première électrode 3 recouvrant au moins une partie du premier collecteur 2, la première électrode 3 étant en contact électrique avec le premier collecteur de courant 2, ladite électrode 3 étant destinée à être enrichie en une espèce ionique,
∘ une couche de protection 4 recouvrant totalement la première électrode et au moins une partie du premier collecteur de courant 2, la couche de protection 4 étant électriquement isolante et ioniquement conductrice.
Le substrat 1 muni de l'empilement est plongé dans une solution électrolytique 5.
De préférence, la partie du premier collecteur de courant 2 non recouverte par la couche de protection 4 est maintenue hors de la solution électrolytique 5, i.e. seule la partie du collecteur de courant 2 recouverte par la couche de protection 4 est immergée dans la solution 5. Ceci permet d'éviter le dépôt de l'espèce ionique sur le premier collecteur de courant 2.
Préférentiellement, le substrat 1 est un substrat électriquement isolant pour éviter le dépôt de l'espèce ionique sur le substrat. Par électriquement isolant, on entend qu'il est en matériau électriquement isolant ou qu'il est en matériau électriquement conducteur et recouvert d'une couche électriquement isolante. Une contre-électrode 6 est également plongée dans la solution électrolytique 5.

Pour enrichir la première électrode 3 en espèce ionique la solution électrolytique 5 comprend au moins un sel de l'espèce ionique et/ou la contre-électrode comprend ladite espèce ionique.
L'espèce ionique peut provenir soit de la solution électrolytique 5 uniquement, soit de la solution électrolytique 5 et de la contre-électrode 6, soit de la contre-électrode 6 uniquement.
La solution électrolytique 5 peut comprendre plusieurs sels de l'espèce ionique. Préférentiellement, la solution électrolytique 5 comporte au moins un solvant carbonaté et au moins un sel de l'espèce ionique.
Par carbonaté, on entend un composé comportant un groupement comprenant un atome de carbone lié à trois atomes d'oxygène (CO₃²⁻).
Le carbonate de propylène (PC), le carbonate de diméthyle (DMC), le carbonate d'éthylène (EC) et le carbonate de diéthylène (DEC) sont, par exemple, des solvants carbonatés. Ces solvants ont donné de bons résultats. Un solvant ou un mélange de plusieurs solvants carbonatés peuvent être utilisés pour former la solution électrolytique.
Dans le cas d'une lithiation, le sel de l'espèce ionique est, par exemple, un sel de lithium de type LiPF₆. Ce type de sel ionique permet, avantageusement, d'assurer une bonne conductivité ionique des ions Li⁺.
La contre-électrode 6, plongée dans la solution électrolytique 5, est à base d'un matériau électriquement conducteur.
Un courant ou une tension électrique est appliquée entre le premier collecteur de courant 2 et la contre-électrode 6, de manière à faire migrer l'espèce ionique depuis la solution électrolytique 5 et/ou depuis la contre-électrode 6 vers la première électrode 3 et à enrichir la première électrode 3 en espèce ionique.
L'espèce ionique diffuse à travers la couche de protection 4 ioniquement conductrice.

La contre-électrode 6 peut être une source de l'espèce ionique.
La contre-électrode 6 est, avantageusement, à base de matériau électriquement conducteur comprenant ladite espèce ionique.
L'espèce ionique est, selon un mode de réalisation, une espèce ionique alcaline : la contre-électrode 6 est à base d'un métal alcalin.
Préférentiellement, la contre-électrode 6 est en lithium, en sodium ou en potassium. L'espèce ionique qui sera insérée dans la première électrode 3 correspond, respectivement, aux ions lithium, aux ions sodium ou aux ions potassium.
Selon un autre mode de réalisation, l'espèce ionique est une espèce ionique non alcaline. La contre-électrode 6 est dans ce cas, par exemple, en cuivre.
Le courant ou la tension électrique appliquée entre le premier collecteur de courant 2 et la contre-électrode 6, permet de faire migrer l'espèce ionique depuis la contre-électrode 6 vers la première électrode 3 et à enrichir la première électrode 3 en espèce ionique.

Le courant ou la tension électrique est appliquée grâce à un générateur 7 de courant ou de tension électrique.

Le passage de chaque électron, fourni par le générateur 7, correspond à l'insertion d'un ion dans la première électrode 3.
Ce procédé permet de contrôler la cinétique d'insertion de l'espèce ionique, et la quantité d'espèce ionique insérée au sein du matériau d'électrode, en choisissant le courant ou la tension appliquée ainsi que la durée du traitement électrochimique.

Les densités de courant sont inférieures à 100mA/cm². Avantageusement, elles sont inférieures à 1mA/cm².
La tension appliquée sera choisie par l'homme du métier en fonction du matériau d'électrode. Avantageusement, elle sera inférieure à 5V.
La durée de l'étape d'enrichissement est, avantageusement, inférieure à 1h. Elle dépend du courant et de l'épaisseur de l'électrode.
L'enrichissement est homogène sur l'ensemble du matériau d'électrode et l'état de surface n'est pas détérioré.
Dans le cas d'un enrichissement en ions lithium, i.e. dans le cas d'une lithiation, les phénomènes de sur-lithiation localisés sont évités. L'électrode obtenue est homogène et présente de bonnes performances électrochimiques.

La demanderesse a constaté, contre toute attente, que le procédé de lithiation d'un matériau d'électrode par une voie électrochimique en solution est particulièrement adapté pour les dispositifs en couches minces (microbatteries et systèmes électrochromes).
En effet, ce genre de procédé en solution n'est, normalement, pas recommandé pour ces dispositifs dans la mesure où l'immersion directe des dispositifs dans une solution liquide, aura pour conséquence une absorption de la solution d'électrolyte dans les porosités du matériau d'électrode. De ce fait, à la fin du processus de lithiation, l'électrode sera irrémédiablement souillée par des résidus de la solution d'électrolyte, qui rendront impossible les étapes ultérieures de réalisation de la microbatterie et/ou réduiront les performances du dispositif électrochimique.

De plus, dans le cas du procédé de la demanderesse, l'étape d'enrichissement est réalisée à travers la couche de protection, ce qui permet d'éviter l'absorption de molécules sur le matériau d'électrode.

Préférentiellement, la première électrode 3 est en matériau non lithié. Le matériau non lithié étant choisi, de préférence, parmi l'oxyde de vanadium (VₓO_{y}), l'oxyde tungstène (WOₓ), ou encore l'oxyde de molybdène (MoOₓ). Le matériau non lithié peut encore être un oxysulfure de titane (TiOₓS_{y}).
Encore plus préférentiellement, la première électrode 3 est en TiOS, en silicium, en germanium, en graphite, en indium, en étain ou en V₂O₅.

Préférentiellement, la couche de protection 4 correspond, avantageusement, à la couche d'électrolyte solide de la microbatterie, ou du système électrochrome. Il n'y a pas besoin de retirer la couche de protection après l'enrichissement de la première électrode 3. La seconde électrode 10 pourra être déposée directement sur la couche de protection 4.
L'électrolyte solide peut être en oxynitrure de bore et de lithium (LiBON), en oxynitrure de silicophosphate et de lithium (LiSiPON), etc. De manière préférentielle, l'électrolyte solide est en oxynitrure de phosphore et de lithium (LiPON) dit « lipon ». Le LIPON est un bon conducteur ionique.
L'électrolyte solide peut également être en Li₂S-P₂S₅.

Il est couramment admis par l'homme de l'art que l'état des interfaces entre les électrodes et l'électrolyte est un facteur majeur contrôlant les performances de la batterie.
L'étape de lithiation électrochimique à travers la couche d'électrolyte solide n'est, a priori, pas recommandée.
Or, contre toute attente, la demanderesse a constaté que le processus d'enrichissement par voie électrochimique ne dégrade pas, ou peu, la surface de l'électrolyte solide en contact avec le bain. La préservation de l'état de surface de l'électrolyte solide est, également, attribuée à la limitation de l'oxydation naturelle de cette surface par l'apport des ions à l'origine du processus d'enrichissement en espèce ionique.

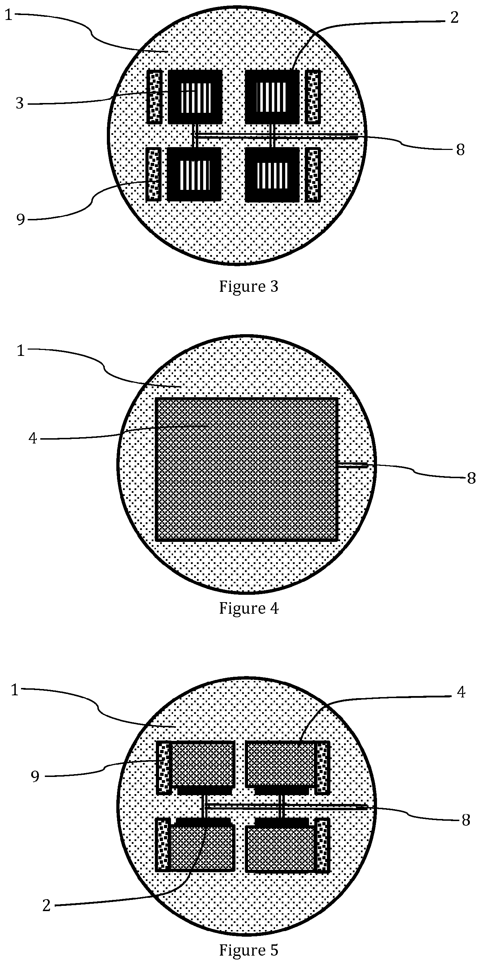

Comme représenté à la figure 3, selon un mode de réalisation préférentiel, une piste 8 électriquement conductrice est déposée sur le substrat 1.

La piste 8 est électriquement connectée au premier collecteur de courant 2. La piste 8 est, avantageusement, formée avant le dépôt de la première électrode 3 et/ou avant le dépôt du premier collecteur de courant.
La piste 8 électriquement conductrice est, préférentiellement, en cuivre ou en titane. Le cuivre est, avantageusement, un bon conducteur électrique et présente de faibles coûts d'élaboration.
D'une manière générale, la piste 8 est élaborée à partir d'un matériau électriquement conducteur ne pouvant pas s'allier avec l'espèce ionique à transférer.
Préférentiellement, un second collecteur de courant 9 est également déposé sur le substrat 1. Le second collecteur de courant 9 est dissocié électriquement du premier collecteur de courant 2.
Classiquement, les collecteurs de courant 2, 9 sont formés par des couches métalliques, par exemple en platine, chrome, or, titane, etc.

La couche de protection 4 est déposée de manière à encapsuler la première électrode 3.
Dans un mode de réalisation préférentiel, la couche de protection 4 est déposée sur le substrat, de manière à recouvrir totalement à la fois la première électrode 3, le premier collecteur de courant 2 et le second collecteur de courant 9.
Dans cette configuration, le générateur 7 de courant ou de tension électrique est relié à la piste 8 électriquement conductrice et à la contre-électrode 6, de manière à permettre la lithiation de la première électrode 3.

Selon un mode de réalisation préférentiel, et comme représenté à la figure 4, une partie de la piste 8 électriquement conductrice est recouverte par la couche de protection 4.
Le générateur 7 de courant ou de tension électrique est, avantageusement, relié à la piste 8 électriquement conductrice non recouverte par la couche de protection 4.

Dans une telle configuration, l'étape d'immersion est facilitée puisque seule la partie de la piste 8 électriquement conductrice non recouverte par la couche de protection ne doit pas être immergée. Il n'y a pas de risque d'immerger le premier collecteur de courant 2 car celui-ci est protégé par la couche de protection 4.

Selon un mode de réalisation alternatif, comme le premier 2 et le second 9 collecteurs de courant sont dissociés électriquement, le second collecteur de courant 9 peut ne pas être recouvert par la couche de protection 4. Le second collecteur 9 ne participera pas au procédé d'enrichissement car il sera électriquement dissocié du générateur 7 de tension ou de courant.

Après l'enrichissement de la première électrode 3 en espèce ionique alcaline, et avant le dépôt de la seconde électrode 10, la couche de protection 4 est gravée, de manière à libérer au moins une partie du premier collecteur de courant 2 (figure 5).
Par libérer, on entend qu'il est rendu accessible, par retrait de la couche de protection 4. Il peut être, ultérieurement, connecté à un autre élément ou être recouvert par un autre élément.
Avantageusement, le second collecteur de courant 9 est également libéré.

Le premier 9 et le second 10 collecteurs de courant sont, par exemple, à base de platine, de chrome, d'or, de titane, de molybdène, de nickel, ou encore de cuivre.

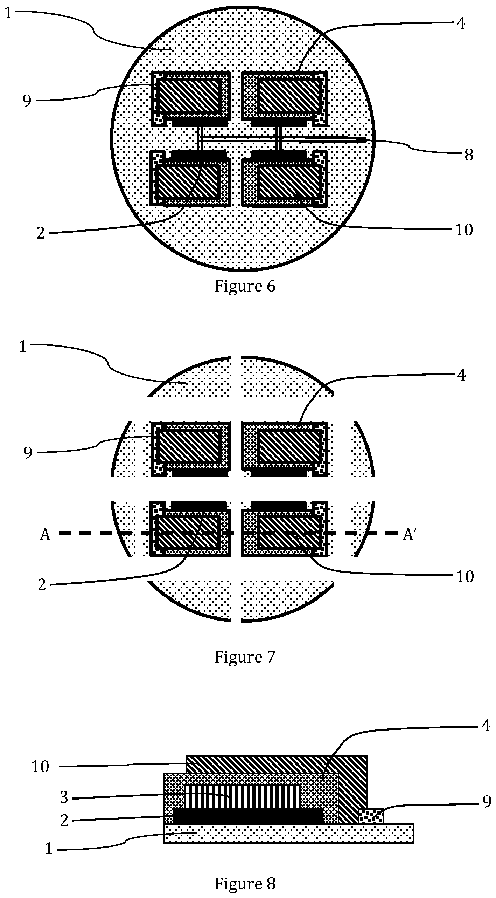

Une seconde électrode 10 est déposée sur la couche de protection 4 (figure 6). La seconde électrode 10 est électriquement connectée au second collecteur de courant 9.
La seconde électrode 10 n'est pas présente dans l'empilement lors de l'enrichissement de la première électrode 3.

Une large gamme de matériau peut être utilisée pour réaliser la seconde électrode.
La seconde électrode 10 est, par exemple, en silicium, en germanium, en graphite, en indium ou en étain.

Selon un mode de réalisation préférentiel, le substrat 1 comporte plusieurs empilements de manière à former simultanément plusieurs premières électrodes enrichies.
Les électrodes sont, avantageusement, reliées au même générateur de courant ou de tension lors du procédé d'enrichissement.
Comme représenté aux figures 3 à 7, dans le cas d'un substrat 1 muni de plusieurs empilements, une seule couche de protection 4 est, avantageusement, utilisée pour recouvrir tous les empilements. L'enrichissement de chaque électrode est réalisé à travers cette unique couche de protection 4.
Alternativement, chaque empilement pourrait être recouvert d'une couche de protection propre.
Après le dépôt d'une seconde électrode 10 sur chacun des empilements, le substrat 1 est, avantageusement, gravé ou découpé, de manière à séparer les différents empilements les uns des autres (figure 7).
La découpe peut être réalisée par toute technique adaptée. Préférentiellement, le substrat 1 est découpé grâce à un laser.
Préférentiellement, le substrat 1 est en verre ou en silicium. Ce substrat peut être de tout type homogène ou hétérogène. Dans le cas d'un substrat en matériau électriquement conducteur, le substrat 1 est isolé électriquement du bain électrolytique.

La figure 8 représente une microbatterie obtenue par le procédé. La batterie est représentée schématiquement, en coupe, par rapport à l'axe AA' de la figure 7.

Dans les modes de réalisation décrits précédemment, le second collecteur de courant 9 est déposé, préalablement au dépôt de la seconde électrode 10. Selon un mode de réalisation alternatif, le second collecteur de courant 9 est déposé après le dépôt de la seconde électrode 10, de manière à recouvrir la seconde électrode 10.

Le procédé va maintenant être décrit au moyen de l'exemple suivant donné à titre illustratif et non limitatif.

Dans l'exemple, les électrodes de quatre microbatteries ont été enrichies simultanément.
L'empilement est réalisé sur un substrat en verre de type borosilicate d'une épaisseur de 100*µ*m.
Des collecteurs de courant anodique et cathodique en titane d'une épaisseur de 250 nm sont formés sur un substrat par dépôt physique en phase vapeur (PVD).
Une piste conductrice en cuivre d'une épaisseur de 200nm est ensuite déposée par PVD sur ce substrat. La piste conductrice est en contact avec chaque collecteur cathodique de chaque empilement à former.
Une électrode positive ou cathode en TiOS d'une épaisseur de 1.2*µ*m est déposée par PVD sur chaque collecteur cathodique.
L'électrolyte solide, du LiPON de 2*µ*m d'épaisseur, est déposé par PVD de façon à recouvrir la totalité des surfaces des couches d'électrode positive et collecteurs cathodiques.
Seule une partie de la piste cuivre n'est pas couverte par cette couche d'électrolyte solide.

Le substrat muni des différents empilements est plongé dans un bain électrolytique.

Une contre-électrode en lithium métallique est également plongée dans le bain électrolytique. Cette électrode correspond à l'anode du dispositif d'enrichissement.
La solution d'électrolytique peut, à titre d'exemple, être composée de solvants de type carbonates EC, PC, DMC, DEC, etc. et d'un sel de lithium de type LiPF₆, celui-ci assurant une bonne conductivité ionique des ions Li⁺ entre la cathode et l'anode en lithium métallique, en plus d'être une source en espèce ionique.

Un générateur électrique, de courant ou de tension, est relié d'une part à la partie de la piste en cuivre non recouverte par l'électrolyte solide et d'autre part à une contre électrode en lithium métallique.
Une densité de courant de 50*µ*A/cm² est appliquée pendant une durée de 1 heure.

Le substrat de verre, muni de l'empilement, est sorti du bain électrolytique. L'ensemble est rincé afin d'éliminer les résidus de solution électrolytique.

La couche d'électrolyte en LiPON est ensuite gravée de façon à libérer le contact des collecteurs cathodique et anodique.

Une couche d'électrode négative en silicium d'une épaisseur de 65nm est déposée au-dessus de l'électrolyte solide et est en contact avec le collecteur anodique

Finalement, le substrat de verre est découpé par laser afin de séparer chacune des microbatteries.

Les performances des microbatteries obtenues ont été testées.

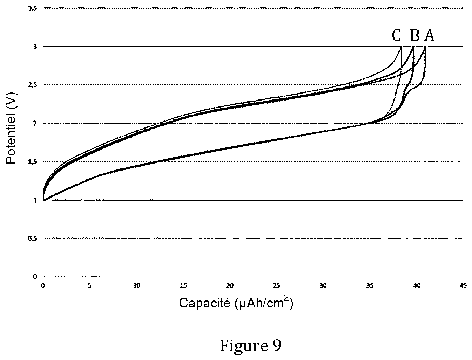

La figure 9 représente l'évolution du potentiel aux bornes de la batterie en fonction de l'état de charge (la capacité) de cette batterie.

Les courbes de charge-décharge montrent la parfaite fonctionnalité du dispositif pour différentes valeurs de courant de test (10*µ*A - courbe A ; 20*µ*A - courbe B ; et 40*µ*A - courbe C).

Le procédé d'enrichissement permet un contrôle très précis du taux de lithiation d'une électrode d'un dispositif électrochimique en couche mince.
La quantité de lithium insérée est contrôlée par le courant (ou la tension) appliqué lors du procédé de réalisation.

Les électrodes enrichies par le procédé présente une lithiation homogène.

Les dispositifs électrochimiques, comportant une telle électrode enrichie, comme par exemple, une batterie, une microbatterie ou un système électrochrome présentent de bonnes performances électrochimiques.

L'électrode enrichie en espèce ionique alcaline peut être, plus particulièrement, utilisée pour la réalisation de batteries au lithium en couche minces et, en particulier, pour la réalisation de microbatteries, destinées à entrer dans la fabrication de cartes à puces, d'étiquettes intelligentes, d'alimentation d'horloge en temps réel (ou RTC pour « real time clock »), de systèmes médicaux implantés (« pacemaker » ou implants auditifs par exemple). Ces électrodes peuvent encore servir à la réalisation de microsystèmes de type capteurs physiques, chimiques ou biologiques, pour la réalisation d'actionneurs, ou de dispositifs microfluidiques.
Des cellules électrochromes ou de supercapacités en couche minces sont encore des domaines d'application pour de telles électrodes.

## Revendications

1. Procédé d'enrichissement d'une électrode d'un dispositif électrochimique choisi parmi une batterie, une microbatterie, un système électrochrome, une cellule électrochrome ou une supercapacité en couches minces, avec une espèce ionique, ledit procédé comprenant les étapes suivantes :
- fournir un substrat (1) muni au moins d'un empilement comprenant :
o un premier collecteur de courant (2) recouvrant au moins une partie du substrat (1),
∘ une première électrode (3) recouvrant au moins une partie du premier collecteur (2), la première électrode (3) étant en contact électrique avec le premier collecteur de courant (2),
o une couche de protection (4) recouvrant totalement la première électrode (3) et au moins une partie du premier collecteur de courant (2), la couche de protection (4) étant électriquement isolante et ioniquement conductrice, la couche de protection (4) étant une couche d'électrolyte solide,
- plonger dans une solution électrolytique (5) :
o le substrat (1) muni de l'empilement,
∘ une contre-électrode (6), à base d'un matériau conducteur,
la solution électrolytique (5) comprenant au moins un sel de l'espèce ionique et/ou la contre-électrode (6) comprenant ladite espèce ionique,
- appliquer, à l'aide d'un générateur de courant ou de tension, un courant ou une tension électrique entre le premier collecteur de courant (2) et la contre-électrode (6), de manière à faire migrer l'espèce ionique vers la première électrode (3) et à enrichir la première électrode (3) en l'espèce ionique,
- déposer une seconde électrode (10) sur la couche de protection (4) après l'enrichissement de la première électrode (3) en espèce ionique.

2. Procédé selon la revendication 1, **caractérisé en ce qu'**une piste (8) électriquement conductrice est déposée sur le substrat, ladite piste **(8)** étant électriquement connectée au premier collecteur de courant **(3),**
**en ce que** la couche de protection **(4)** recouvre totalement le premier collecteur de courant **(3),**
et **en ce que** le générateur **(7)** de courant ou de tension est relié à la piste **(8)** électriquement conductrice et à la contre-électrode **(6).**

3. Procédé selon la revendication 2, **caractérisé en ce qu'**une partie de la piste (8) électriquement conductrice est recouverte par la couche de protection (4) et **en ce que** le générateur (7) de courant ou de tension électrique est relié à la piste (8) électriquement conductrice non recouverte par la couche de protection (4).

4. Procédé selon l'une des revendications 2 et 3, **caractérisé en ce que** la piste (8) électriquement conductrice est en cuivre ou en titane.

5. Procédé selon l'une quelconque des revendications 1 à 4, **caractérisé en ce que** la seconde électrode (10) est en silicium, en germanium, en graphite, en indium ou en étain.

6. Procédé selon l'une quelconque des revendications 1 à 5, **caractérisé en ce que** la couche de protection (4) est gravée, avant le dépôt de la seconde électrode (10), de manière à libérer au moins une partie du premier collecteur de courant (2).

7. Procédé selon l'une quelconque des revendications 1 à 6, **caractérisé en ce que** l'espèce ionique est une espèce ionique alcaline, telle que le lithium, le sodium ou le potassium.

8. Procédé selon l'une quelconque des revendications 1 à 6, **caractérisé en ce que** l'espèce ionique est une espèce ionique non alcaline, telle que le cuivre.

9. Procédé selon l'une quelconque des revendications 1 à 8, **caractérisé en ce que** la couche de protection (4) est en LIPON ou en Li₂S-P₂S₅.

10. Procédé selon l'une quelconque des revendications 1 à 9, **caractérisé en ce que** la première électrode (3) est en TiOS, en silicium, en germanium, en graphite, en indium, en étain ou en VₛO₅.

11. Procédé selon l'une quelconque des revendications 1 à 10, **caractérisé en ce que** la solution électrolytique (5) comporte au moins un solvant carbonate et au moins un sel de l'espèce ionique.

12. Procédé selon l'une quelconque des revendications 1 à 11, **caractérisé en ce que** le substrat (1) est en verre ou en silicium.

13. Procédé selon l'une quelconque des revendications 1 à 12, **caractérisé en ce que** le substrat (1) comporte plusieurs empilements de manière à former simultanément plusieurs premières électrodes enrichies.

14. Procédé selon la revendication 13, **caractérisé en ce que** lesdites premières électrodes sont reliées au même générateur de courant ou de tension au cours du procédé d'enrichissement.

## Patentansprüche

1. Verfahren zur Anreicherung einer Elektrode einer elektrochemischen Vorrichtung, ausgewählt aus einer Batterie, einer Mikrobatterie, einem elektrochromen System, einer elektrochromen Zelle oder einer Superkapazität aus dünnen Schichten, mit einer ionischen Spezies, wobei das Verfahren die folgenden Schritte umfasst:
- Bereitstellen eines Substrats (1), das mit mindestens einem Stapel versehen ist, mit:
• einem ersten Stromkollektor (2), der zumindest einen Teil des Substrats (1) bedeckt,
• einer ersten Elektrode (3), die zumindest einen Teil des ersten Kollektors (2) bedeckt, wobei die erste Elektrode (3) in elektrischem Kontakt mit dem ersten Stromkollektor (2) steht,
• einer Schutzschicht (4), die die erste Elektrode (3) vollständig und zumindest einen Teil des ersten Stromkollektors (2) bedeckt, wobei die Schutzschicht (4) elektrisch isolierend und ionisch leitend ist, wobei die Schutzschicht (4) eine Schicht aus einem Feststoff-Elektrolyten ist,
- Eintauchen:
• des mit dem Stapel versehenen Substrats (1),
• einer Gegenelektrode (6) auf der Basis eines leitenden Materials in eine elektrolytische Lösung (5),
wobei die elektrolytische Lösung (5) mindestens ein Salz der ionischen Spezies umfasst und/oder die Gegenelektrode (6) diese ionische Spezies umfasst,
- Aufbringen, mit Hilfe eines Strom- oder Spannungsgenerators, eines Stromes oder einer elektrischen Spannung zwischen dem ersten Stromkollektor (2) und der Gegenelektrode (6) derart, dass die ionische Spezies in Richtung der ersten Elektrode (3) wandert und die erste Elektrode (3) mit der ionischen Spezies angereichert wird,
- Anbringen einer zweiten Elektrode (10) auf der Schutzschicht (4) nach der Anreicherung der ersten Elektrode (3) mit ionischer Spezies.

2. Verfahren nach Anspruch 1, **dadurch gekennzeichnet, dass** eine elektrisch leitende Bahn (8) auf dem Substrat angebracht wird, wobei die Bahn (8) elektrisch an den ersten Stromkollektor (3) angeschlossen ist,
dass die Schutzschicht (4) den ersten Stromkollektor (3) vollständig bedeckt,
und dass der Strom- oder Spannungsgenerator (7) mit der elektrisch leitenden Bahn (8) und mit der Gegenelektrode (6) verbunden ist.

3. Verfahren nach Anspruch 2, **dadurch gekennzeichnet, dass** ein Teil der elektrisch leitenden Bahn (8) von der Schutzschicht (4) bedeckt ist und dass der elektrische Strom- oder Spannungsgenerator (7) mit der elektrisch leitenden Bahn (8) verbunden ist, die nicht von der Schutzschicht (4) bedeckt ist.

4. Verfahren nach einem der Ansprüche 2 und 3, **dadurch gekennzeichnet, dass** die elektrisch leitende Bahn (8) aus Kupfer oder aus Titan besteht.

5. Verfahren nach einem der Ansprüche 1 bis 4, **dadurch gekennzeichnet, dass** die zweite Elektrode (10) aus Silizium, aus Germanium, aus Graphit, aus Indium oder aus Zinn besteht.

6. Verfahren nach einem der Ansprüche 1 bis 5, **dadurch gekennzeichnet, dass** die Schutzschicht (4) vor der Anbringung der zweiten Elektrode (10) derart geätzt wird, dass zumindest ein Teil des ersten Stromkollektors (2) freigelegt wird.

7. Verfahren nach einem der Ansprüche 1 bis 6, **dadurch gekennzeichnet, dass** die ionische Spezies eine alkalihaltige ionische Spezies wie zum Beispiel Lithium, Natrium oder Kalium ist.

8. Verfahren nach einem der Ansprüche 1 bis 6, **dadurch gekennzeichnet, dass** die ionische Spezies eine nicht alkalihaltige ionische Spezies wie z.B. Kupfer ist.

9. Verfahren nach einem der Ansprüche 1 bis 8, **dadurch gekennzeichnet, dass** die Schutzschicht (4) aus LIPON oder aus Li₂S-P₂S₅ besteht.

10. Verfahren nach einem der Ansprüche 1 bis 9, **dadurch gekennzeichnet, dass** die erste Elektrode (3) aus TiOS, aus Silizium, aus Germanium, aus Graphit, aus Indium, aus Zinn oder aus V₂O₅ besteht.

11. Verfahren nach einem der Ansprüche 1 bis 10, **dadurch gekennzeichnet, dass** die elektrolytische Lösung (5) mindestens ein kohlensäurehaltiges Lösungsmittel und mindestens ein Salz der ionischen Spezies enthält.

12. Verfahren nach einem der Ansprüche 1 bis 11, **dadurch gekennzeichnet, dass** das Substrat (1) aus Glas oder aus Silizium besteht.

13. Verfahren nach einem der Ansprüche 1 bis 12, **dadurch gekennzeichnet, dass** das Substrat (1) mehrere Stapel aufweist, so dass es gleichzeitig mehrere erste angereicherte Elektroden ausbildet.

14. Verfahren nach Anspruch 13, **dadurch gekennzeichnet, dass** die ersten Elektroden im Laufe des Anreicherungsverfahrens mit demselben Strom- oder Spannungsgenerator verbunden werden.

## Claims

1. A method for performing enrichment of an electrode of an electrochemical device, with an ionic species, said method comprising the following steps:
- providing a substrate (1) provided with at least one stack comprising:
∘ a first current collector (2) covering at least a part of the substrate (1),
∘ a first electrode (3) covering at least a part of the first collector (2), the first electrode (3) being in electric contact with the first current collector (2),
∘ a protective layer (4) totally covering the first electrode (3) and at least a part of the first current collector (2), the protective layer (4) being electrically insulating and ionically conducting,
- immersing in an electrolytic solution (5) :
∘ the substrate (1) provided with the stack,
∘ a counter-electrode (6) made from conducting material,
the electrolytic solution (5) comprising at least one salt of the ionic species and/or the counter-electrode (6) comprising said ionic species,
- applying an electric voltage or current, by means of a voltage or current generator, between the first current collector (2) and the counter-electrode (6) so as to make the ionic species migrate to the first electrode (3) and to enrich the first electrode (3) with the ionic species,
- depositing a second electrode (10) on the protective layer (4) after enrichment of the first electrode (3) with the ionic species.

2. The method according to claim 1, **characterized in that** an electrically conducting track (8) is deposited on the substrate, said track (8) being electrically connected to the first current collector (3),
**in that** the protective layer (4) totally covers the first current collector (3),
and **in that** the current or voltage generator (7) is connected to the electrically connecting track conducting (8) and to the counter-electrode (6).

3. The method according to claim 2, **characterized in that** a part of the electrically conducting track (8) is covered by the protective layer (4) and **in that** the electric current or voltage generator (7) is connected to the electrically conducting track (8) not covered by the protective layer (4).

4. The method according to one of claims 2 and 3, **characterized in that** the electrically conducting track (8) is made from copper or from titanium.

5. The method according to any one of claims 1 to 4, **characterized in that** the second electrode (10) is made from silicon, germanium, graphite, indium or tin.

6. The method according to any one of claims 1 to 5, **characterized in that** the protective layer (4) is etched, before deposition of the second electrode (10), so as to release at least a part of the first current collector (2).

7. The method according to any one of claims 1 to 6, **characterized in that** the ionic species is an alkaline ionic species, such as lithium, sodium or potassium.

8. The method according to any one of claims 1 to 6, **characterized in that** the ionic species is a non-alkaline ionic species, such as copper.

9. The method according to any one of claims 1 to 8, **characterized in that** the protective layer (4) is made from LIPON or from Li₂S-P₂S₅.

10. The method according to any one of claims 1 to 9, **characterized in that** the first electrode (3) is made from TiOS, silicon, germanium, graphite, indium, tin or V₂O₅.

11. The method according to any one of claims 1 to 10, **characterized in that** the electrolytic solution (5) comprises at least one carbonate solvent and at least one salt of the ionic species.

12. The method according to any one of claims 1 to 11, **characterized in that** the substrate (1) is made from glass or from silicon.

13. The method according to any one of claims 1 to 12, **characterized in that** the substrate (1) comprises several stacks so as to simultaneously form several enriched first electrodes.

14. The method according to claim 13, **characterized in that** said first electrodes are connected to the same current or voltage generator during the enrichment method.
